# EUROPÄISCHE PATENTSCHRIFT

(11) **EP 0 632 564 B1**
(45) Veröffentlichungstag und Bekanntmachung des Hinweises auf die Patenterteilung: **17.09.1997**
(21) Anmeldenummer: 94109445.0
(22) Anmeldetag: 18.06.1994
(51) Int. Cl.: H02K 3/52

(54) **Elektromotor mit einem Ständerblechpaket**
Electrical motor with a stator stack of sheets
Moteur électrique avec un paquet de tôles au stator

(30) Priorität: 29.06.1993 DE 4321540
(43) Veröffentlichungstag der Anmeldung: 04.01.1995
(73) Patentinhaber: FHP Motors GmbH, 26133 Oldenburg (DE)
(72) Erfinder: Hadeler, Dieter, D-26123 Oldenburg (DE); Pöpelt, Bernhard, D-26127 Oldenburg (DE)
(74) Vertreter: Zangs, Rainer E., Dipl.-Ing.

(56) Entgegenhaltungen:
- EP-A- 0 469 426
- DD-A- 123 252
- DE-A- 2 901 321
- DE-A- 4 037 753
- GB-A- 2 002 969
- US-A- 4 340 829

## Beschreibung

Die Erfindung betrifft einen Elektromotor mit einem Ständerblechpaket der im Oberbegriff des Patentanspruchs 1 angegebenen Art.

Bei bekannten Motoren wird die elektrische Leistung über flexible Leitungen zugeführt, welche mit den Motorwicklungen verbunden sind. Diese Verbindung mit den Motorwicklungen erfolgt beispielsweise mittels Klemmverbindungen in hülsenartigen Verbindungsstücken, die isoliert zwischen den Wicklungen angeordnet sind, oder mit Hilfe eines Verbindungsgehäuses, das über einen Fuß in die Nuten des Blechpaketes gesteckt wird, wie es beispielsweise aus der DE 27 36 831 C2 bekannt ist. Hierbei ist es jedoch von Nachteil, daß die Enden der Wicklungsdrähte, d. h. die Wicklungsenden, eine gewisse Überlänge aufweisen müssen, damit das Verbindungsgehäuse bzw. die hülsenartigen Verbindungsstücke noch handhabbar bleiben. Diese Überlängen dürfen aber nicht frei beweglich bleiben, müssen aber im Bereich des Wickelkopfes untergebracht werden. Da für die Wicklungen überwiegend Drahtlack verwendet wird, entsteht hier die Gefahr der Beschädigung der Lackisolierung durch Abrieb, wodurch Kurzschlüsse entstehen können, die die Funktionsfähigkeit des Motors ganz entscheidend behindern können. Außerdem ist das Befestigen der Wicklungsenden zeitraubend und umständlich.

Aus US-A-4 340 829 ist ein Elektromotor bekannt, bei welchem zur Führung und Umlenkung der Wicklungsdrähte, an einer Endscheihe Dome angeordnet sind.

Der Erfindung liegt die Aufgabe zugrunde, einen Elektromotor mit einem Ständerblechpaket zu schaffen, der ein automatisches Wickeln und Verlegen der Schaltdrähte einschließlich der Fixierung bzw. des Verschaltens der Ständerspulenenden untereinander und mit einem Thermowächter mittels eines Automaten auf einfachste Weise ermöglicht. Diese Aufgabe wird durch die im Patentanspruch 1 gekennzeichnete Erfindung gelöst.

Der erfindungsgemäße Elektromotor ermöglicht in einfacher Weise die Festlegung der Ständerspulenenden unmittelbar nach bzw. während des Einbringens der Ständerwicklung in die Nuten des Ständerblechpaketes, wobei zweckmäßigerweise der Thermowächter bereits vorkonfektioniert in der Endscheibe gehaltert und mit seinen Anschlußdrähten mit den entsprechenden Klemmen in den Kammern der Endscheibe festlegbar ist. Die maschinelle, insbesondere durch einen Wicklungsautomaten zu bewerkstelligende, Kontaktierung und Festlegung der Spulenwicklungsenden und der anderen Anschlußdrähte in den Klemmen der Kammern wird durch die an dem Abdeckteil und an der Endscheibe angeordneten Dome sehr vereinfacht.

Das Anschlußgehäuse ist fest mit der zugehörigen Endscheibe verbunden. Die Wicklungsenden werden nach dem Fertigen der Wicklung in das Anschlußgehäuse eingeführt. Da das Anschlußgehäuse eine definierte Lage in Bezug auf die Wicklungen hat, ergibt sich dadurch der Vorteil, daß die Wicklungsenden genau die erforderliche Länge aufweisen. Die Wicklungsenden sind nicht mehr frei in ihrer Bewegung. Die Gefahr der Beschädigung der Lackisolierung wird dadurch weitgehend verringert.

Hierbei ist bevorzugt, daß die Anschlußgehäuse einstückig mit der Endscheibe ausgebildet sind. Anschlußgehäuse und Endscheibe können beispielsweise leicht zusammen als Spritzteil gefertigt werden. Hierdurch verringert sich der Fertigungsaufwand, da die Endscheibe nicht mehr mit den Anschlußgehäusen verbunden werden muß.

In vorteilhafter Ausgestaltung weisen die Anschlußgehäuse für jedes Wicklungsende eine Klemme auf, die das Wicklungsende nach dem Einführen hält. Bei der Fertigung muß also das Wicklungsende lediglich in das Anschlußgehäuse eingeführt und abgeschnitten werden. Weiterhin weisen die Kammern in den Anschlußgehäusen schlitzartige Öffnungen auf, in die die Wicklungsenden senkrecht zu ihrer Länge einführbar sind. Dadurch werden umständliche Einfädel-Operationen vermieden. Jedes Wicklungsende kann einfach in den Schlitz eingelegt werden. Wenn es gegen den Boden oder eine Seitenwand des Schlitzes gezogen wird, kommt es automatisch mit der ihm zugeordneten Klemme in Kontakt, wo es gehalten wird. Die Fertigung kann dadurch sehr rasch erfolgen, ohne daß jedoch Überlängen der Wicklungsenden entstehen.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: eine Draufsicht auf die Endscheibe und
- Figur 2: eine Seitenansicht auf einen Teil des Ständerblechpaketes eines Elektromotors teilweise im Schnitt.

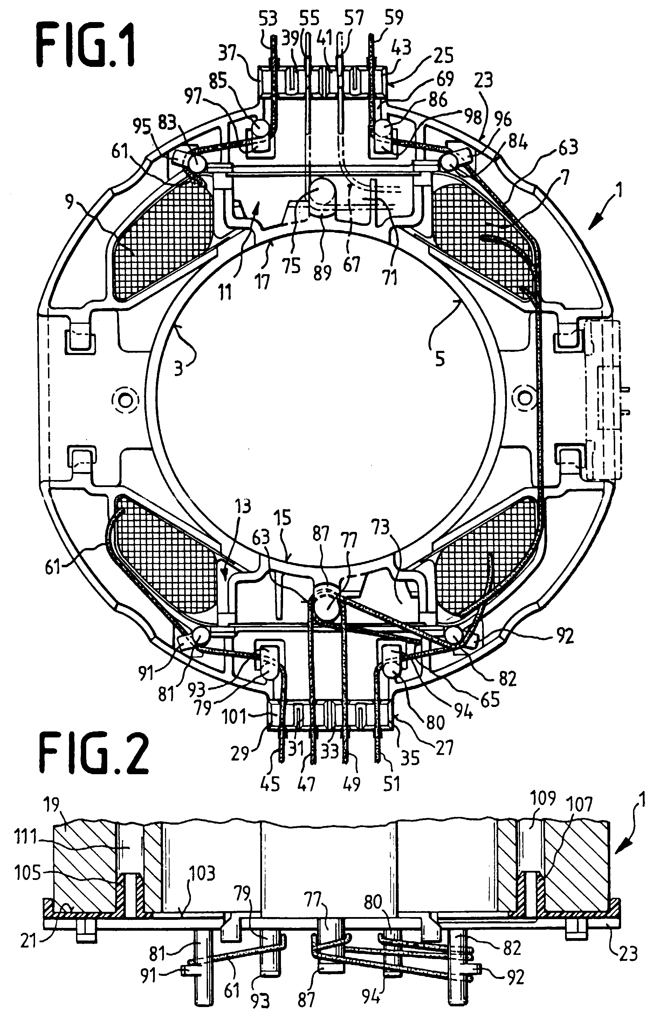

Die Erfindung bezieht sich auf einen Elektromotor, dessen Ständer 1 ausgeprägte Pole 3, 5 besitzt, auf die je eine Wicklung 7, 9 aufgebracht sind. Zwischen den Polen 3, 5 befinden sich Pollücken, in welche Abdeckteile 11, 13 eingeschoben sind. Diese Abdeckteile 11, 13 weisen eine der Rotorrundung angepaßte Form 15, 17 auf. Der Ständer 1 besteht in bekannter Weise aus einer Vielzahl von übereinander geschichteten Blechen bestehendem Ständerblechpaket 19. An den stirnseitigen Endflächen 21 dieses Ständerblechpaketes 19 sind elektrisch isolierende Endscheiben 23, die z. B. aus Kunststoff bestehen, angeordnet, an denen die Wicklungsköpfe der Wicklungen 7, 9 anliegen. In den Figuren 1 und 2 ist nur eine Endscheibe 23 dargestellt, welche Anschlußgehäuse 25, 27 mit Kammern 29, 31, 33, 35, 37, 39, 41, 43 aufweist, in welche die Enden 45, 47, 49, 51, 53, 55, 57, 59 von Wicklungsdrähten 61, 63 und Anschlußdrähten 65, 67 befestigt sind.

Die freien Stirnflächen 71, 73 der die Pollücken verschließenden Abdeckteile 11, 13 und der über den Pollücken befindlichen Stirnfläche 69 der Endscheibe 23 weisen aufrecht angeordnete Dome 75, 77, 79, 80, 81, 82, 83, 84, 85, 86 zur Umlenkung und Führung der freien Enden 45, 47, 49, 51, 53, 55, 57, 59 der Wicklungsdrähte 61, 63 und der Anschlußdrähte 65, 67 zu dem Anschlußgehäuse 25, 27 auf. Diese Dome 75, 77, 79, 80, 81, 82, 83, 84, 85, 86 sind mit laschenartigen Ansätzen 87, 89, 91, 92, 93, 94, 95, 96, 97, 98 versehen, welche als Niederhalter für die Drähte 61, 63, 65, 67 dienen. Hierbei sind die laschenartigen Ansätze 93, 94, 97, 98, 87, 89 an den freien Enden der Dome 79, 80, 85, 86, 75, 77 angeordnet, die lediglich als Niederhalter der Drähte dienen. Die Dome 81, 82, 83, 84 weisen mittig angeordnete laschenartige Ansätze 91, 92, 95, 96 auf, die zum Trennen bzw. Führen der Drähte 61, 63 in zwei Ebenen dienen. Hierdurch werden elektrische Einflüssen zwischen den Drähten 61, 63 sicher vermieden.

Im Rahmen der Erfindung weist die Endscheibe 23 zwei Anschlußgehäuse 25, 27 auf, welche diametral gegenüberliegend an dem äußeren Rand der freien Stirnfläche 69 der Endscheibe 23 angeordnet sind. Diese Anschlußgehäuse 25, 27 sind mit Kammern 29, 31, 33, 35, 37, 39, 41 und 43 mit einseitig offenen Schlitzen 99 versehen, über welche die freien, parallel zur Stirnfläche 69 der Endscheibe 23 geführten Enden 45, 47, 49, 51, 53, 55, 57, 59 der Drähte 61, 63, 65, 67 senkrecht zu ihrer Länge ablegbar sind. In diese Kammern 29, 31, 33, 35, 37, 39, 41, 43 sind in bekannter Weise Klemmen 101 eingesetzt, durch die die freien Enden 45, 47, 49, 51, 53, 55, 57, 59 der Drähte 61, 63, 65, 67 sicher festlegbar sind. Diese Klemmen 101 können aus Schneidkontakten bestehen, die die Isolierung der Wicklungsenden durchdringen und dadurch einen Kontakt zu der Sehne der Wicklungsdrähte ermöglichen.

Die beiden Anschlußgehäuse 25, 27 sind mit der Endscheibe 23 einstückig ausgebildet und können daher als Spritzgußteil gefertigt werden. Hierdurch verringert sich der Fertigungsaufwand, da die Anschlußgehäuse 25, 27 nicht mehr mit der Endscheibe 23 verbunden werden müssen.

In vorteilhafter Ausgestaltung sind die vorderen Enden 45, 47 der Wicklungsdrähte 61, 63 in dem Anschlußgehäuse 27 und die hinteren Enden 53, 59 der Wicklungsdrähte 61, 63 in dem anderen Anschlußgehäuse 25 festgelegt. Jedes Anschlußgehäuse 25, 27 weist vier nebeneinander angeordnete Kammern 29, 31, 33, 35 und 37, 39, 41, 43 mit je einer Klemme 101 auf, wobei die Abdeckteile 15, 17 je einen mittig zu dem Anschlußgehäuse 25, 27 angeordneten Dom 75, 77 zum Umleiten der Drähte 63, 65 in die mittleren Kammern 31, 33, 39, 41 aufweist. Die Umlenkung der freien Enden 45, 51, 53, 59 der in die äußeren Kammern 29, 35, 37, 43 mündenden Drähte 61, 63 erfolgt über je einen Dom 79, 80, 85, 86 an der Endscheibe 23. Eine weitere Umlenkung der Drähte 61, 63 erfolgen noch über die an der Endscheibe 23 angeordneten Dome 81, 82, 85, 86.

In vorteilhafter Ausgestaltung weist die Endscheibe 23 auf der dem Ständerblechpaket 19 zugewandten Stirnfläche 103 Zentrierelemente auf, welche in Zentrierausnehmungen des Ständerblechpaketes 19 formschlüssig eingreifen. Hierdurch wird die Endscheibe 23 und damit die Anschlußgehäuse 25, 27 auf einfachste Weise zu den Domen 75, 77 an den Abdeckteilen 15, 17 ausgerichtet. Gemäß der Figur 2 bestehen die Zentrierelemente aus Zentrierzapfen 105, 107, welche in Zentrierbohrungen 109, 111 des Ständerblechpaketes 19 formschlüssig eingreifen.

Zur Fertigung kann auf sehr einfache Art und Weise nach dem Fertigstellen der Wicklungen 7, 9 mit den Wicklungsköpfen das jeweilige Wicklungsende von oben in den Schlitz einer Kammer in der Endscheibe 23 eingelegt werden. Wenn es nach unten gezogen wird, gerät es automatisch in elektrischem Kontakt mit den Schneidkontakten 101. Diese durch einen Automaten durchführbare Tätigkeit ist für alle Wicklungsenden und die beiden Anschlüsse der Motorschutzvorrichtung erforderlich. Danach ist der Ständer 1 praktisch betriebsbereit, wobei in die Anschlußgehäuse 25, 27 Stecker zur Verbindung von flexiblen elektrischen Leitungen mit den Wicklungsenden einführbar sind.

## Patentansprüche

1. Elektromotor mit einem Ständerblechpaket (19) mit mindestens zwei ausgeprägten Polen (3, 5), auf die jeweils eine Wicklung (7, 9) aufgebracht ist und zwischen denen sich Pollücken befinden, welche durch eingeschobene Abdeckteile (11,13) mit einer der Rotorrundung angepaßten Form abdeckbar sind und mit an den stirnseitigen Endflächen (21) des Blechpaketes angeordneten, elektrisch isolierenden Endscheiben (23), an denen die Wicklungsköpfe der Wicklungen (7, 9) anliegen und von denen mindestens eine Endscheibe (23) mindestens ein Anschlußgehäuse (25, 27) mit Kammern (29,31,33,35,37,39,41,43) aufweist, in welche die Enden der Wicklungen (7, 9) und der Anschlußdrähte eingeführt und befestigt sind, **dadurch gekennzeichnet**, daß die freien Stirnflächen (71, 73) der die Pollücken verschließenden Abdeckteile (11, 13) und der über den Pollücken befestigten Stirnflächen (69) der Endscheiben (23) aufrecht angeordnete Dome (75, 77, 79, 80, 81, 82, 83, 84, 85, 86) zur Umlenkung und Führung der freien Enden (45, 47, 49, 51, 53, 55, 57, 59) der Wicklungsdrähte (61, 63) und der Anschlußdrähte (65, 67) zu dem Anschlußgehäuse (25, 27) weisen.

2. Elektromotor nach Anspruch 1, **dadurch gekennzeichnet**, daß die Dome (75, 77, 79, 80, 81, 82, 83, 84, 85, 86) laschenartige Ansätze (87, 89, 91, 92, 93, 94, 95, 96, 97, 98) aufweisen, welche als Niederhalter für die Drähte dienen.

3. Elektromotor nach Anspruch 2, **dadurch gekennzeichnet**, daß die laschenartigen Ansätze (93, 94, 97, 98, 87, 89) an den freien Enden der Dome (79, 80, 85, 86, 75, 77) angeordnet sind.

4. Elektromotor nach Anspruch 2, **dadurch gekennzeichnet**, daß die Dome (81, 82, 83, 84) laschenartige Ansätze (91, 92, 95, 96) aufweisen, die zum Trennen bzw. Führen der Drähte (61, 63) in zwei Ebenen dienen.

5. Elektromotor nach einem der vorhergehenden Ansprüche, **dadurch gekennzeichnet**, daß eine Endscheibe (23) zwei Anschlußgehäuse (25, 27) aufweist, welche diametral einander gegenüberliegend an dem äußeren Rand der freien Stirnfläche (69) der Endscheibe (23) angeordnet sind.

6. Elektromotor nach Anspruch 5, **dadurch gekennzeichnet**, daß die Anschlußgehäuse (25, 27) Kammern (29, 31, 33, 35, 37, 39, 41, 43) mit einseitig offenen Schlitzen (99) aufweisen, über welche die freien Enden, parallel zur Stirnfläche (69) der Endscheibe (23) geführten Enden (45, 47, 49, 51, 53, 55, 57, 59) der Drähte (61, 63, 65, 67) senkrecht zu ihrer Länge ablegbar sind, und daß die freien Enden (45, 47, 49, 51, 53, 55, 57, 59) der Drähte (61, 63, 65, 67) durch eine in jeder Kammer (29, 31, 33, 35, 37, 39, 41, 43) eingesetzten Klemme (101) festlegbar sind.

7. Elektromotor nach Anspruch 6, **dadurch gekennzeichnet**, daß die Klemmen (101) aus Schneidkontakten bestehen.

8. Elektromotor nach einem der vorhergehenden Ansprüche, **dadurch gekennzeichnet**, daß die beiden Anschlußgehäuse (25, 27) einstückig mit der Endscheibe (23) ausgebildet sind.

9. Elektromotor nach Anspruch 8, **dadurch gekennzeichnet**, daß die vorderen Enden (45, 47) der Wicklungsdrähte (61, 63) in einem Anschlußgehäuse (27) und die hinteren Enden (53, 59) der Wicklungsdrähte (61, 63) in dem anderen Anschlußgehäuse (25) festgelegt sind.

10. Elektromotor nach Anspruch 8, **dadurch gekennzeichnet**, daß jedes Anschlußgehäuse (25, 27) vier nebeneinander angeordnete Kammern (29, 31, 33, 35, 37, 39, 41, 43) mit je einer Klemme (101) aufweisen, daß die Abdeckteile (15, 17) je einen mittig zu dem Anschlußgehäuse (25, 27) angeordneten Dom (75, 77) zum Umleiten der Drähte (63, 65) in die mittleren Kammern (31, 33, 39, 41) aufweisen und daß die freien Enden (45, 51, 53, 59) der in die äußeren Kammern (29, 35, 37, 43) mündenden Drähte (61, 63) über je einen Dom (79, 80, 85, 86) an der Endscheibe (23) umlenkbar sind.

11. Elektromotor nach einem der vorhergehenden Ansprüche, **dadurch gekennzeichnet**, daß die Endscheibe (23) auf der dem Ständerblechpaket (19) zugewandten Stirnfläche (103) Zentrierelemente aufweist, welche in Zentrierausnehmungen des Ständerblechpaketes (19) formschlüssig eingreifen.

12. Elektromotor nach Anspruch 11, **dadurch gekennzeichnet**, daß die Zentrierelemente aus Zentrierzapfen (105, 107) bestehen, welche in Zentrierbohrungen (109, 111) des Ständerblechpaketes (19) formschlüssig eingreifen.

## Claims

1. Electric motor with a stator plate packet (1) with at least two salient poles (3, 5) on each of which there is mounted a winding (7, 9) and between which are located pole gaps, which by means of inserted cover portions (11, 13), may be covered with a shape adapted to the round configuration of the rotor, and with end discs (23) which are electrically insulating and located on the end faces (21) of the plate packet, and on which the winding heads of the windings (1, 9) abut, and of which at least one end disc (23) has at least one connector housing (25, 27) with chambers (1, 9, 31, 33, 35, 37, 34, 41, 43) into which the ends of the windings (7, 9) and of the connector wires are introduced and secured, characterised in that the free end faces (71, 73) of the cover portions (11, 13) closing the pole gaps and of the end faces (69) of the end disc (23) secured above the pole gaps have upright domes (75, 77, 79, 80, 81, 82, 83, 84, 85, 86) for deflecting and guiding the free ends (45, 47, 49, 51, 53, 55, 57, 59) of the winding wires (61, 63) and of the connector wires (65, 67) to the connector housing (25, 27).

2. Electric motor according to claim 1, characterised in that the domes (75, 77, 79, 80, 81, 82, 83, 84, 85, 86) have tab-like projections (87, 89, 91, 92, 93, 94, 95, 96, 97, 98) which serve as retaining means for the wires.

3. Electric motor according to claim 2, characterised in that the tab-like projections (93, 94, 97, 98, 87, 89) are located on the free ends of the domes (79, 80, 81, 85, 86, 75, 77).

4. Electric motor according to claim 2, characterised in that domes (81, 82, 83, 84) have tab-like projections (91, 92, 95, 96) which serve to separate or guide the wires (61, 63) in two planes.

5. Electric motor according to one of the preceding claims, characterised in that the end disc (23) has two connector housings (25, 27) which, lying diametrically opposite one another, are located on the outer edge of the free end face (69) of the end disc (23).

6. Electric motor according to claim 5, characterised in that the connector housings (25, 27) have chambers (29, 31, 33, 35, 37, 39, 41, 43) with slots (99) open at one end, through which the free ends (45, 47, 49, 51, 53 55, 57, 59) guided parallel to the end face (69) of the end disc (23) of the wires (61, 63, 65, 67) may be laid vertically with respect to their length, and in that the free ends (45, 47, 49, 51, 53, 55, 57, 59) of the wires (61, 63, 65, 67) may be fixed by means of a terminal (101) inserted in each chamber (29, 31, 33, 35, 37, 39, 41, 43).

7. Electric motor according to claim 6, characterised in that the terminals (101) comprise insulation displacement contacts.

8. Electric motor according to one of the preceding claims, characterised in that the two connector housings (25, 27) are formed integrally with the end disc (23).

9. Electric motor according to claim 8, characterised in that the forward ends (45, 47) of the winding wires (61, 63) are secured in one connector housing (27) and the rearward ends (53, 59) of the winding wires (61, 63) are secured in the other connector housing (25).

10. Electric motor according to claim 8, characterised in that each connector housing (25, 27) has four chambers (29, 31, 33, 35, 37, 39, 41, 43) located next to one another each with a terminal (101), in that the covered portions (15, 17) each have a dome (75, 77) located centrally to the connector housing (25, 27) for deflecting the wires (63, 65) into the central chambers (31, 33, 39, 41), and in that the free ends (45, 51, 53, 59) of the wires (61, 63) opening into the outer chambers (29, 35, 37, 43) are each deflectable via a dome (79, 80, 85, 86) on the end disc (23).

11. Electric motor according to one of the preceding claims, characterised in that the end disc (23)has, on the end face (103) facing the stator plate packet (19), centering members which engage positively in centering recesses of the stator plate packet (19).

12. Electric motor according to claim 11, characterised in that the centering members comprise centering pins (105, 107), which engage positively in centering bores (109, 111) of the stator plate packet (19).

## Revendications

1. Moteur électrique avec un paquet de tôles de stator (19) comprenant au moins deux pales saillants (3, 5), sur lesquels est mise en place une bobine (7, 9) et entre lesquels se trouvent des espaces interpolaires qui sont recouverts par des parties de recouvrement insérées (11, 13) de forme adaptée à l'arrondi du rotor et comprenant des flasques terminaux (23) électriquement isolés, qui sont disposés sur les surfaces d'extrémité (21) en face avant du paquet de tôles, contre lesquels s'appliquent les têtes des bobines (7, 9) et dont au moins un flasque terminal (23) présente au moins un coffret de jonction (25, 27) avec des cavités (29, 31, 33, 35, 37, 39, 41, 43) dans lesquelles sont insérés et fixés les extrémités de bobines (7, 9) et des fils de jonction, caractérisé en ce que les surfaces avant libres (71, 73) des parties de recouvrement (11, 13) obturant les espaces interpolaires et les surfaces avant (69) des flasques terminaux (23), fixées au-dessus des espaces interpolaires, présentent des dômes (75, 77, 79, 80, 81, 82, 83, 84, 85, 86) disposés verticalement, en vue de la déviation et du guidage des extrémités libres (45, 47, 49, 51, 53, 55, 57, 59) des fils de bobines (61, 63) et des fils de jonction (65, 67) au coffret de jonction (25, 27).

2. Moteur électrique selon la revendication 1, caractérisé en ce que les dômes (75, 77, 79, 80, 81, 82, 83, 84, 85, 86) présentent des appendices formant languettes (87, 89, 91, 92, 93, 94, 95, 96, 97, 98) qui servent d'éléments de retenue pour les fils.

3. Moteur électrique selon la revendication 2, caractérisé en ce que les appendices formant languettes (93, 94, 97, 98, 87, 89) sont disposés aux extrémités libres des dômes (79, 80, 85, 86, 75, 77).

4. Moteur électrique selon la revendication 2, caractérisé en ce que les dômes (81, 82, 83, 84) présentent des appendices formant languettes (91, 92, 95, 96) qui servent à séparer respectivement à guider les fils (61, 63) dans deux plans.

5. Moteur électrique selon l'une des revendications précédentes, caractérisé en ce qu'un disque terminal (23) présente deux coffrets de jonction (25, 27) qui sont disposés diamétralement opposés l'un à l'autre sur le bord externe de la surface avant libre (69) du flasque terminal (23).

6. Moteur électrique selon la revendication 5, caractérisé en ce que les coffrets de jonction (25, 27) présentent des cavités (29, 31, 33, 35, 37, 39, 41, 43) avec des fentes (99) ouvertes sur un côté, par l'intermédiaire desquelles les extrémités libres (45, 47, 49, 51, 53, 55, 57, 59) des fils (61, 63, 65, 67), guidées parallèlement à la surface avant (69) du flasque terminal (23) peuvent être introduites perpendiculairement à leur longueur et en ce que les extrémités libres (45, 47, 49, 51, 53, 55, 57, 59) des fils (61, 63, 65, 67) peuvent être fixées par une borne (101) insérée dans chaque cavité (29, 31, 33, 35, 37, 39, 41, 43).

7. Moteur électrique selon la revendication 6, caractérisé en ce que les bornes (101) se composent de contacts à lame.

8. Moteur électrique selon l'une des revendications précédentes, caractérisé en ce que les deux coffrets de jonction (25, 27) sont conçus en une seule pièce avec le flasque terminal (23).

9. Moteur électrique selon la revendication 8, caractérisé en ce que les extrémités avant (45, 47) des fils de bobines (61, 63) sont fixées dans un coffret de jonction (27) et les extrémités arrière (53, 59) des fils de bobines (61, 63) dans l'autre coffret de jonction (25).

10. Moteur électrique selon la revendication 8, caractérisé en ce que chaque coffret de jonction (25, 27) présente quatre cavités (29, 31, 33, 35, 37, 39, 41, 43) disposées les unes à côté des autres, avec chacune une borne (101), en ce que les parties de recouvrement (15, 17) présentent chacune un dôme (75, 77) disposé au milieu du coffret de jonction (25, 27) pour la déviation des fils (63, 65) dans les cavités médianes (31, 33, 39,.41) et en ce que les extrémités libres (45, 51, 53, 59) des fils (61, 63), débouchant dans les cavités externes (29, 35, 37, 43), peuvent être déviées par l'intermédiaire d'un dôme (79, 80, 85, 86) sur le flasque terminal (23).

11. Moteur électrique selon l'une des revendications précédentes, caractérisé en ce que le flasque terminal (23) présente, sur la surface avant (103) tournée vers le paquet de tôles de stator (19), des éléments de centrage qui s'engagent par adhérence de forme dans des évidements de centrage du paquet de tôles de stator (19).

12. Moteur électrique selon la revendication 11, caractérisé en ce que les éléments de centrage se composent de boulons de centrage (105, 107) qui s'engagent par adhérence de forme dans les perçages de centrage (109, 111) du paquet de tôles de stator (19).
